# FASCICULE DE BREVET EUROPEEN

(11) **EP 2 289 790 B1**
(45) Date de publication et mention de la délivrance du brevet: **08.01.2014**
(21) Numéro de dépôt: 10290455.4
(22) Date de dépôt: 25.08.2010
(51) Int. Cl.: B62K 21/26, B62J 23/00, B62J 33/00

(54) **Protège-main pour poignée de guidon de motocyclette**
Hanschutz für Motorradlenker
Handguard for motorcycle handlebar

(30) Priorité: 26.08.2009 FR 0904057
(43) Date de publication de la demande: 02.03.2011
(73) Titulaire: Trophy, 75001 Paris (FR)
(72) Inventeur: Mallot, Thomas, 61600 Saint-Georges- d'Annebecq (FR); Amiot, Cyril, 61220 Léa Coulonche (FR)
(74) Mandataire: Bezault, Jean

(56) Documents cités:
- EP-A2- 2 006 197
- DE-A1- 3 344 582
- GB-A- 2 113 163
- JP-A- 10 297 568
- US-A- 4 141 567
- US-A- 4 438 661
- US-A1- 2004 068 844
- US-A1- 2008 173 126

## Description

L'invention se rapporte aux accessoires de protection pour véhicule de type motocyclette.

Le secteur des véhicules découverts de type motocyclettes est en pleine croissance. Cette croissance est accompagnée d'une course à la performance. La performance recherchée tourne principalement autour de la puissance de véhicule pour gagner de plus en plus en vitesse.

Mais la vitesse accentue le désagrément créé par les circonstances météorologiques. En effet, plus la vitesse à laquelle on circule est élevée, plus le désagrément ressenti par le conducteur (ou pilote) est accentué. Cela s'applique surtout lorsque le pilote fait face à des intempéries comme la pluie, la neige ou le froid.

Ainsi, il est souhaitable d'améliorer la protection du conducteur, tout en conservant un sentiment de liberté de manoeuvre de mouvements adaptée pour la conduite de véhicule de type motocyclette.

Le document EP 2 006 197 décrit un manchon de protection selon le préambule de la revendication 1.

On retrouve dans l'art antérieur diverses publications se rapportant à la protection de conducteur de véhicule de type motocyclette.

Le document EP 1442971 déposée par la Demanderesse décrit un tablier rigidifié qui protège un conducteur des intempéries.

Le document WO 2008/010245 décrit un protège main pour motocyclettes pour apporter de la protection et/ou du confort au conducteur. Le protège main est relié au guidon de motocyclettes par un dispositif de connexion comprenant notamment un élément de type boulon.

Les mains sont particulièrement exposées aux intempéries régnant autour du véhicule et sont donc notamment soumis à une baisse relative de la température due à une vitesse élevée.

Dans le commerce on trouve des manchons fixable au voisinage des poignées de guidon de véhicule de type motocyclettes. Généralement, les manchons comprennent une poche laquelle entoure une poignée de guidon. La poche peut alors recevoir une main d'un conducteur pour servir de logement étanche.

Mais les produits du commerce sont insatisfaisants. Notamment, car ils ne pallient pas les contraintes que l'on rencontre dans l'agencement d'un tel manchon de protection. Parmi ces contraintes, on peut par exemple citer :
- le besoin d'adaptabilité de façon solidaire sur les poignées de guidon,
- le besoin d'une place suffisante à l'intérieur de la poche pour manoeuvrer un guidon à la main (éventuellement munie de gant),
- le besoin d'une accessibilité aux commandes du guidon (notamment avec le pouce),
- le besoin d'une disposition agencée pour ne pas appuyer sur les leviers de freins (à l'arrêt ou à grande vitesse), et
- le besoin d'un montage assurant une sécurité anti-vol.

À cela s'ajoute que les poignées de guidon sont souvent munis de masselottes d'équilibrage. Ceci ajoute une grande variabilité de forme aux poignées de guidon lorsqu'ils sont pris ensemble avec lesdites masselottes. Les manchons de l'art antérieur doivent donc généralement être spécifiquement adaptés à un certain type de poignée.

En outre, généralement les modèles de manchons connus utilisent des vis initialement prévues pour les masselottes pour venir se fixer sur les poignées de guidon. Mais certains modèles de véhicule ne comportent pas de masselottes. Il est donc relativement complexe (perçage/vissage), voir impossible de fixer des manchons sur ces véhicules.

La présente invention vient améliorer la situation en permettant notamment une adaptation universelle.

À cet effet, l'invention vise un manchon pour poignée de guidon comprenant une poche propre à loger une main, le manchon comprenant en outre une coquille sensiblement de révolution, dont l'une des extrémités est ouverte, et l'autre supporte un point de fixation pour fixer la poche. La coquille comportant sur au moins une partie de sa longueur une attache de forme intérieure homologue de celle d'une poignée nominale minimale de sorte que la coquille est agencée pour être enfichée sur une poignée de guidon en une position enfichée. La coquille présente au moins un moyen de serrage en position enfichée qui assure un serrage étroit de l'attache contre la poignée de guidon.

La coquille peut comprendre au moins une première partie tubulaire laquelle forme l'attache. Ainsi, l'attache est agencée essentiellement en tube sectionné selon son axe central longitudinal, ledit tube sectionné présentant un diamètre prédéfini. Le diamètre est choisi selon la poignée de guidon et le mode de réalisation. En effet, pour assurer un bon serrage de l'attache contre une poignée de guidon, il peut être prévu que l'attache ait un diamètre légèrement inférieur à la poignée. Généralement, il est commun qu'un diamètre « standard » d'une poignée de guidon soit choisi dans une plage allant de 30 mm à 34 mm. Selon un mode de réalisation la première partie tubulaire présente un diamètre interne choisi dans une plage allant de 26 mm à 32 mm, et est de préférence d'environ 29 mm. Ainsi, l'attache présente un moyen de rappel.

L'attache peut être réalisée en une matière semi-rigide. Dans un mode de réalisation l'attache comprend des bords longitudinaux libres sur au moins une partie de sa longueur. Les bords longitudinaux libres peuvent être écartés de leur position de repos pour enficher la coquille sur la poignée en position enfichée. Dans ce mode, le moyen de serrage est un moyen de rappel desdits bord libres longitudinaux de la position enfichée vers ladite position de repos.

De plus, les bords libres longitudinaux peuvent être prolongés circonférentiellement par des lèvres sur au moins une partie de leur longueur. Ainsi, les lèvres peuvent, tout comme les bords longitudinaux libres, êtres écartées de leur position de repos pour enficher ladite coquille sur ladite poignée. La forme des lèvres au repos peut ou non être homologue de celle d'une poignée nominale minimale. Généralement, les lèvres forment une continuité avec les bords libres longitudinaux selon un rayon identique ou différent de celui de l'attache. Par exemple, il peut être prévu un rayon inférieur pour favoriser le serrage contre la poignée.

La coquille peut comprendre une partie terminale centrée sur l'axe central longitudinal de la première partie tubulaire. La partie terminale forme une deuxième partie tubulaire en continuité avec la première et est agencée en tube sectionné selon son axe central longitudinal. Son diamètre interne est sensiblement supérieur à celui de la première partie tubulaire. Le diamètre est choisi pour pouvoir loger des masselottes d'équilibrage souvent disposées sur l'extrémité extérieure d'une poignée de guidon. Préférentiellement, le diamètre de la partie terminale est choisi dans une plage allant de 30 mm à 45 mm. Selon un mode de réalisation le diamètre de la partie terminale est d'environ de 41 mm.

Selon un autre mode de réalisation la coquille comprend deux demi-coquilles formant l'attache. Dans ce mode de réalisation l'attache est agencée pour former un tube lorsque les deux demi-coquilles sont montées ensemble en position enfichée ; ainsi le tube formé par les deux demi-coquilles enveloppe sensiblement le pourtour de ladite poignée de guidon.

Selon un autre mode de réalisation, la coquille comprend au moins une gorge, l'entourant circonférentiellement. Chaque gorge peut être est pontée par au moins un collet formant passant pour un collier-colson de sécurité. Chaque gorge ensemble ou non avec chaque passant, forme alors un guide pour un collier-colson de sécurité permettant de sécuriser par serrage la coquille sur une poignée de guidon et solidariser davantage la structure générale de l'invention en position enfichée.

De préférence, la coquille est réalisée en une matière thermoplastique choisie parmi le groupe comprenant les polypropylènes, les polyuréthannes, les polyamides et les élastomères. L'utilisation des matières précitées favorisent une déformation lors du montage de la coquille sur une poignée de guidon.

Selon un mode de réalisation, le l'attache peut être réalisé en fourreau de revêtement élastomère. Dans ce mode, l'attache est enfichée similairement à une « chaussette ». Avantageusement, le fourreau de revêtement élastomère est réalisé en cylindre ou encore en tube élastique dont le diamètre interne est inférieur à celui de la poignée. Ainsi, il est assuré un serrage étroit de l'attache contre la poignée en position enfichée.

Il peut être prévu que la coquille comprend un disque terminal agencé sur une extrémité opposée à l'extrémité ouverte. Le disque est centré sur l'axe longitudinal central commun de la première et de la deuxième partie tubulaire. Selon la géométrie de la poignée de guidon, le disque terminal vient ou non en butée contre la poignée de guidon lorsque la coquille est montée sur un véhicule.

D'autres avantages et caractéristiques de l'invention apparaîtront à la lecture de la description détaillée ci-après et sur les dessins annexés sur lesquels :
- la figure 1 montre une vue en perspective de dessus d'une coquille selon un mode de réalisation de l'invention,
- la figure 2 montre une vue en perspective de dessous d'une coquille selon un mode de réalisation de l'invention,
- la figure 3 montre une vue de profil d'une coquille selon un mode de réalisation de l'invention,
- la figure 4 montre une vue de dessus d'une coquille selon un mode de réalisation de l'invention,
- la figure 5 montre une coupe de la coquille de la figure 4 selon un axe longitudinal (coupe A-A),
- la figure 6 montre une coupe de la coquille de la figure 4 selon un premier axe transversal (coupe B-B),
- la figure 7 montre une coupe de la coquille de la figure 4 selon un deuxième axe transversal (coupe C-C),
- la figure 8 montre une vue de face d'une partie terminale de la coquille de la figure 4,
- la figure 9 montre une coquille selon un mode de réalisation de l'invention monté sur une poignée de guidon,
- la figure 10 montre une poche selon un mode de réalisation de l'invention relié à la coquille de la figure 9,
- la figure 11 montre la coquille selon un autre mode de réalisation dans lequel un tube est formé par deux demi-coquilles reliées l'une à l'autre par vissage,
- la figure 12 montre la coquille selon un autre mode de réalisation dans lequel un tube est formé par deux demi-coquilles reliées l'une à l'autre par clipsage, et
- la figure 13 montre partiellement un montage d'une poche sur la coquille de la figure 12.

Les dessins et la description ci-après contiennent, pour l'essentiel, des éléments de caractère certain. Les dessins représentent, pour partie au moins, des aspects difficiles à décrire autrement que par le dessin. Ils font partie intégrante de la description, et pourront donc non seulement servir à mieux faire comprendre la présente invention, mais aussi contribuer à sa définition, le cas échéant.

Dans la présente description la terminologie « poignée de guidon » doit s'interpréter de manière large. En effet, il est généralement fait référence à des poignées classique de guidon de véhicules de type motocyclette, mais il peut également s'agir d'une poignée d'un véhicule de type de vélo. Dans la présente description la terminologie « poignée nominale minimale » décrit une poignée de guidon de taille et forme standardisées, à savoir ayant :
- une section transversale circulaire,
- une longueur d'environ 15 cm, et
- un diamètre choisi dans une plage allant de 30 mm à 34 mm.

De plus, dans la présente description on entend par une « forme homologue de celle d'une poignée nominale minimale » une forme conformée au moins partiellement pour épouser sensiblement une poignée nominale minimale.

Dans la présente description la terminologie « véhicule de type motocyclette » doit également s'interpréter de manière large. En effet, il est généralement fait référence à des véhicules motorisés à deux roues monotraces, mais il peut également s'agir de tricycles ou quadricycles (« quad ») motorisés.

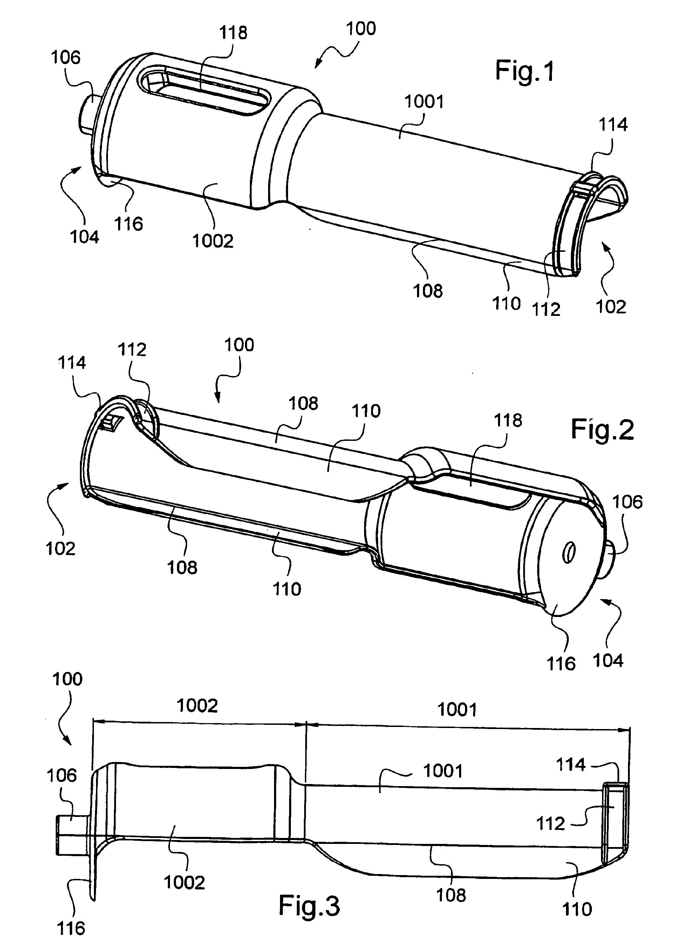

Il est maintenant fait références aux figures 1 à 3 qui montrent une coquille 100 monobloc selon un mode de réalisation de l'invention.

La coquille 100 a une forme sensiblement de révolution, ce qui lui donne un aspect général en tuile canal à savoir en tube sectionné selon la longueur.

La coquille 100 est réalisée monobloc en un matériau semi-rigide de type thermoplastique. Il peut notamment s'agir de polypropylène, de polyuréthane ou encore de polyamide. Ces matériaux permettent de conférer une certaine flexibilité à la coquille qui facilite une déformation adaptée lors du montage par enfichage sur une poignée de guidon. De plus, pour faciliter le montage on peut prévoir de chauffer légèrement ces matériaux pour faciliter la déformation davantage.

La coquille 100 comprend une attache 1001 et une partie terminale 1002.

L'attache 1001 correspond à une première partie tubulaire. L'attache 1001 et la partie terminale 1002 sont formées d'une seule pièce monobloc dont le diamètre en section transversale varie. Ainsi, l'attache 1001 et la partie terminale 1002 peuvent avoir un diamètre identique ou variable.

Dans le mode de réalisation décrit, l'attache 1001 est agencée pour être au moins en partie homologue à une poignée nominale minimale. Ainsi, la coquille forme une « sur-poignée » lorsqu'elle est enfichée sur une poignée nominale minimale.

Dans le mode de réalisation décrit, la partie terminale 1002 forme une deuxième partie tubulaire adjacente à la première et de diamètre supérieur à celui de la première partie tubulaire. Ainsi, une fois la coquille 100 enfichée sur une poignée de guidon, la partie terminale 1002 est disposée sur un coté périphérique externe du véhicule (« coté auriculaire ») pour entourer partiellement une masselotte lorsque celle-ci est présente.

Selon le mode de réalisation des figures 1 à 3, l'attache formée en première partie tubulaire comporte des bords libres longitudinaux 108. Les bords libres longitudinaux 108 sont agencés sur un même plan commun orthogonal.

Dans le mode de réalisation décrit, les bords libres longitudinaux 108 sont prolongés circonférenciellement sur au moins une partie de leur longueur par des lèvres 110. Les lèvres 110 sont donc formées en continuité avec la première partie tubulaire et ont un rayon sensiblement identique ou inférieur à celui de la paroi interne de la première partie tubulaire. On peut prévoir un rayon inférieur pour appuyer davantage le serrage contre la poignée.

L'attache réalisée en première partie tubulaire est conformée pour épouser la forme d'une poignée nominale minimale de sorte que les lèvres 110 et les bords libres longitudinaux 108 peuvent être écartées de leur position de repos pour enficher la coquille 100 sur ladite poignée.

La coquille passe donc d'une position de repos vers une position enfichée lorsqu'elle est montée sur une poignée nominale minimale de véhicule.

Selon le mode de réalisation décrit ici, le diamètre interne de l'attache est de 29 mm. Ce diamètre est inférieur à ce qui est classique pour une poignée nominale minimale de véhicules de type motocyclette.

En effet, les poignées de type motocyclette ont généralement un diamètre choisi dans une plage allant de 30 mm à 34 mm. Ainsi, du fait que le diamètre de l'attache 1001 en première partie tubulaire est inférieure à celle d'une poignée nominale minimale, la coquille 100 comporte un moyen de rappel d'une position enfichée vers une position de repos qui assure un serrage étroit de ladite coquille contre ladite poignée. La partie tubulaire de l'attache est soumise à une tension permanente pour regagner son diamètre en sa position de repos. Le moyen de rappel est accentué par les lèvres 110 qui viennent, tout comme l'attache, épouser le pourtour de la poignée sur laquelle la coquille est enfichée.

La coquille 100 comprend une extrémité ouverte 102 pour venir en appui contre une partie interne de la poignée (« coté pouce »). À l'opposé de l'extrémité ouverte 102, la coquille comprend une extrémité externe 104 comportant un point de fixation 106. Le point de fixation 106 permet de relier une poche à la coquille 100, la poche étant propre à loger une main d'un conducteur. Dans le mode réalisation décrit, le point de fixation 106 est centré sur un disque terminal 116 agencé sur l'extrémité externe 104. Mais il peut être prévu d'excentrer le point de fixation 106 si nécessaire. Avantageusement, le point de fixation 106 est centré sur l'axe longitudinal central de la poignée de véhicule.

Le disque terminal 116 est disposé sensiblement perpendiculairement par rapport à un plan longitudinal central de ladite coquille. Tout comme le point de fixation 106 le disque terminal 116 peut être excentré vis-à-vis de la coquille pour être coaxial avec l'axe longitudinal central de la poignée de véhicule.

Au voisinage de l'extrémité ouverte 102, et circonférentiellement sur la première partie tubulaire 1001, la coquille 100 comporte une gorge 112 agencée pour recevoir un Colson™ de sécurité pour solidariser le bon serrage de la coquille 100 contre une poignée de guidon. Optionnellement, la gorge 112 peut être pontée par au moins un collet 114 afin de permettre le guidage du Colson™ de sécurité d'une part et d'autre part d'assurer une certaine sécurité antivol à l'arrache.

La coquille 100 des figures 1 à 3 comprend un évidement 118 qui permet de faciliter la visibilité lors du montage de la coquille 100 sur un guidon notamment.

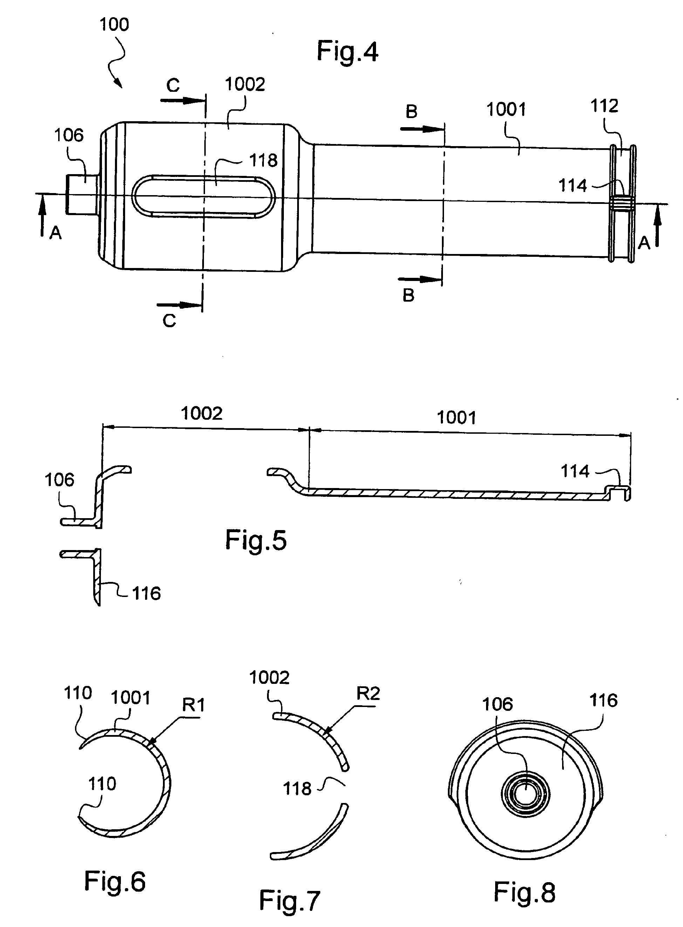

La figure 4 montre une vue de dessus d'une coquille selon un mode de réalisation de l'invention. L'augmentation de diamètre de la première partie tubulaire de l'attache 1001 vers la partie terminale 1002 se fait de manière continue.

Les diamètres respectifs de la première et deuxième partie tubulaire sont centrés sur un axe central longitudinal commun. Dans le mode de réalisation décrit, lorsque la coquille est montée sur une poignée de guidon, cet axe correspond sensiblement à l'axe longitudinal central de ladite poignée. Ainsi, comme indiqué plus haut la coquille, lorsqu'elle est enfichée sur une poignée de guidon peut être assimilée à une "sur-poignée". La coquille 100 épouse sensiblement une grande majorité de la poignée de guidon sur laquelle elle est enfichée.

La figure 5 montre une coupe de la coquille 100 de la figure 4 selon l'axe longitudinal A-A. L'épaisseur de paroi de la coquille 100 monobloc est généralement d'environ 2 mm. Le point de fixation 106 peut correspondre à un filetage sur lequel peut être adaptée une vis notamment.

La figure 6 montre une coupe de la coquille 100 de la figure 4 selon un premier axe transversal B-B. La coupe transversale se trouve donc sensiblement au niveau de la première partie tubulaire de l'attache 1001 et fait apparaître un diamètre interne D1 qui est choisi de 29 mm dans le mode de réalisation décrit ici.

La figure 6 montre également le prolongement de la partie tubulaire d'attache 1001 par les lèvres 110. L'épaisseur de paroi au niveau des lèvres 110 est émincée continuellement vers les extrémités libres desdites lèvres. Ceci permet de conférer une certaine flexibilité aux lèvres 110 pour permettre un écartement adapté pour l'enfichage sur une poignée de guidon.

La figure 7 montre une coupe de la coquille 100 de la figure 4 selon un deuxième axe transversal C-C. La coupe transversale C-C se situe sensiblement au niveau de la partie terminale 1002 formant deuxième partie tubulaire. Sur cette partie terminale 1002, le diamètre interne D2 est plus grand par rapport au diamètre interne D1 de la partie tubulaire 1001. La partie terminale 1002 est agencée pour pouvoir recevoir des masselottes éventuellement disposées sur l'extrémité externe (coté auriculaire) d'une poignée de guidon. La coupe transversale de la figure 7 montre l'évidement 118 au niveau de la partie terminale 1002 pour permettre une visibilité lors de l'enfichage de la coquille 100 sur une poignée de guidon.

La figure 8 montre une vue de face d'une partie terminale de la coquille de la figure 4. Un disque terminal 116 est centré sur l'axe longitudinal central commun aux deux parties tubulaires. Lors de l'enfichage, ce disque terminal 116 permet de venir en butée contre une masselotte lorsque celle-ci est présente. Lorsqu'aucune masselotte n'est présente, le disque terminal 116 peut venir directement en appui contre la face externe (coté auriculaire) de la poignée. Dans un autre mode de réalisation, le disque 116 ne vient pas en butée contre un autre élément, mais reste dans le « vide » pour finition.

La figure 8 montre le point de fixation 106 centré sur l'axe longitudinal central commun aux deux parties tubulaires. Dans le mode de réalisation décrit ici, le point de fixation 106 correspond à un filetage pour recevoir une vis. À titre d'exemple, on peut également réaliser le point de fixage 106 par des boutons pressions ou encore des systèmes vis/écrous. Le point de fixation 106 permet de relier une poche apte à loger une main sur une poignée de guidon comme on le verra plus loin.

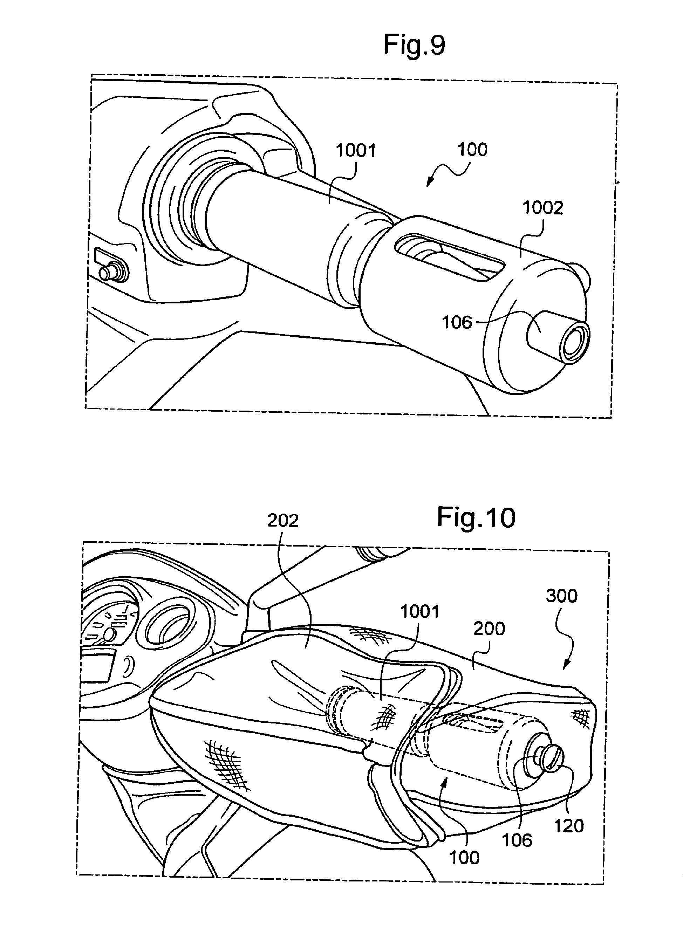

La figure 9 montre une coquille montée sur une poignée de guidon. La coquille forme une « sur-poignée » épousant la forme de la poignée de guidon. Le diamètre interne de l'attache de la coquille étant inférieur à celui de la poignée de guidon, la coquille présente un moyen de rappel une fois enfichée pour permettre un serrage étroit de celle-ci contre la poignée de guidon. Le serrage dans le mode de réalisation décrit ici a lieu au niveau de la première partie tubulaire qui entoure sensiblement la majorité de la poignée de guidon. La partie terminale 1002 reçoit une masselotte externe fixée sur la poignée.

La figure 10 montre un manchon 300 avec une poche 200 solidarisée à une coquille 100 par une vis 120 fixée sur le point de fixation 106. La poche 200 est réalisée en néoprène pour permettre une étanchéité. La poche 200 possède un clapet 202 en forme de rallonge en néoprène pouvant être ouvert ou fermé. En position ouvert du clapet 202, la poche 200 peut recevoir une main d'un conducteur ; en position fermé du clapet 202, la poche 200 assure une étanchéité lorsque le véhicule se trouve à l'arrêt.

La poche 200 peut être munie d'outils de stabilisation (non représentés sur les dessins) tels que des anneaux aptes à recevoir des élastiques ou fils permettant d'attacher la structure générale de la poche en néoprène, par exemple sur un rétroviseur.

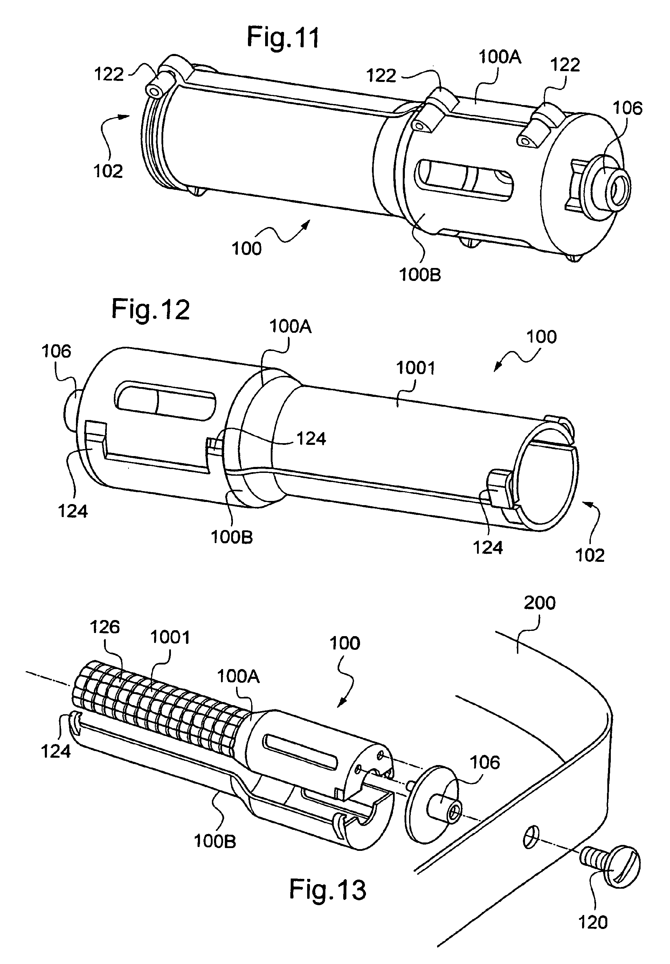

La figure 11 montre une coquille 100 formée par une première demi-coquille 100A et une deuxième demi-coquille 100B. Les deux demi-coquilles 100A et 100B peuvent être fixées l'une avec l'autre par des moyens de vissage 122.

La coquille 100 comprend une attache 1001 agencée pour former un tube dont le diamètre est avantageusement inférieur ou sensiblement identique par rapport au diamètre de la poignée de guidon. En position enfichée de la coquille, l'attache 1001 enveloppe sensiblement le pourtour de ladite poignée de guidon.

Dans ce mode de réalisation, il peut être prévu un matériau semi-rigide ou rigide.

Lorsqu'un matériau semi-rigide est prévu, le moyen de rappel cité plus haut, ensemble avec les moyens de vissage 122 permettent un serrage étroit de l'attache 1001 contre la poignée de véhicule.

Lorsqu'un matériau rigide est prévu, l'attache 1001 peut être agencée pour former un tube dont le diamètre est très faiblement supérieur au diamètre de la poignée de guidon. Dans ce cas, c'est essentiellement les moyens de vissage 122 qui permettent le serrage étroit de l'attache 1001 contre la poignée de véhicule.

La figure 12 montre un autre mode de réalisation d'une coquille 100 formée par une première demi-coquille 100A et une deuxième demi-coquille 100B. Dans ce mode de réalisation les deux demi-coquilles 100A et 100B sont fixées l'une avec l'autre par des moyens de clipsage 124. L'attache 1001 peut être agencée similairement à ce qui à été décrit ci-dessus en référence à la figure 11. Les moyens de clipsage 124 peuvent être crantés pour adapter le serrage étroit de l'attache 1001 contre la poignée de véhicule.

La figure 13 montre partiellement un montage d'une poche 200 sur la coquille 100 de la figure 12. Le point de fixation 106 est réalisé en filetage pour recevoir une vis 120 afin de solidariser la poche 200 avec la structure de la coquille 100.

Il peut être prévu un revêtement agrippant 126 agencé sur le pourtour extérieur de l'attache 1001 afin de permettre un bon maintient de la main du conducteur sur la coquille 100.

Dans un autre mode de réalisation l'attache 1001 peut être réalisée en fourreau de revêtement élastomère. Le fourreau de revêtement élastomère est réalisé en cylindre ou encore en tube élastique dont le diamètre interne est inférieur à celui de la poignée. Ainsi, il est assuré un serrage étroit de l'attache contre la poignée en position enfichée. En montage, l'attache 1001 réalisée en fourreau de revêtement élastomère est enfichée similairement à ce qui est connu lors d'un habillage avec une chaussette à pied. Dans ce mode de réalisation l'attache 1001 peut avantageusement recouvrir sensiblement la totalité du pourtour de la poignée de guidon.

Bien évidemment, l'invention ne se.limite pas aux modes de réalisation spécifiques décrits ci-avant mais englobe toutes les réalisations que pourra envisager l'homme de l'art dans le cadre des revendications annexées.

## Revendications

1. Manchon pour poignée de guidon, ledit manchon comprenant une poche (200) propre à loger une main, **caractérisé en ce qu'**il comprend en outre une coquille (100) sensiblement de révolution, dont l'une des extrémités est ouverte, et l'autre supporte un point de fixation (106) pour fixer ladite poche (200), la coquille (100) comportant sur au moins une partie de sa longueur une attache (1001) de forme intérieure homologue de celle d'une poignée nominale minimale de sorte que la coquille est agencée pour être enfichée sur une poignée de guidon en une position enfichée, et la coquille (100) présentant au moins un moyen de serrage en position enfichée assurant un serrage étroit de ladite attache contre ladite poignée de guidon.

2. Manchon selon la revendication 1, **caractérisé en ce que** la coquille comprend au moins une première partie tubulaire formant ladite attache (1001), l'attache (1001) étant agencée essentiellement en tube sectionné selon son axe central longitudinal.

3. Manchon selon la revendication 2, **caractérisé en ce que** la première partie tubulaire présente un diamètre interne choisi dans une plage allant de 26 mm à 32 mm, préférentiellement d'environ 29 mm.

4. Manchon selon l'une des revendications 2 ou 3, **caractérisé en ce que** la coquille (100) comprend une partie terminale (1002) centrée sur l'axe central longitudinal de ladite première partie tubulaire, la partie terminale (1002) formant une deuxième partie tubulaire en continuité avec la première et étant agencée en tube sectionné selon son axe central longitudinal présentant un diamètre interne sensiblement supérieur à celui de la première partie tubulaire (1001).

5. Manchon selon la revendication 4, **caractérisé en ce que** la partie terminale (1002) présente un diamètre choisi dans une plage allant de 30 mm à 45 mm, préférentiellement d'environ de 41 mm.

6. Manchon selon l'une des revendications précédentes, **caractérisé en ce que** la coquille comprend deux demi-coquilles (100A, 100B) formant attache (1001), ladite attache (1001) étant agencée pour former un tube en position enfichée enveloppant sensiblement le pourtour de ladite poignée de guidon.

7. Manchon selon l'une des revendications précédentes, **caractérisé en ce que** l'attache (1001) est réalisée en une matière semi-rigide et comprend des bords longitudinaux libres (108) sur au moins une partie de sa longueur, les bords longitudinaux libres (108) pouvant être écartés de leur position de repos pour enficher ladite coquille (100) sur ladite poignée en position enfichée, et le moyen de serrage étant un moyen de rappel desdits bord libres longitudinaux de la position enfichée vers ladite position de repos.

8. Manchon selon la revendication 7, **caractérisé en ce que** les bords libres longitudinaux (108) sont prolongés circonférentiellement par des lèvres (110) sur au moins une partie de leur longueur.

9. Manchon selon la revendication 8, **caractérisé en ce que** les lèvres (110) peuvent êtres écartées de leur position de repos pour enficher ladite coquille (100) sur ladite poignée.

10. Manchon selon l'une des revendications précédentes, **caractérisé en ce que** la coquille (100) comprend au moins une gorge (112), l'entourant circonférentiellement.

11. Manchon selon la revendication 10, **caractérisé en ce que** chaque gorge (112) est pontée par au moins un collet (114), chaque collet (114) formant passant pour un collier-colson de sécurité.

12. Manchon selon l'une des revendications précédentes, **caractérisé en ce que** la coquille (100) est réalisée en une matière thermoplastique choisie parmi le groupe comprenant les polypropylènes, les polyuréthannes, les polyamides et les élastomères.

13. Manchon selon la revendication 1, **caractérisé en ce que** l'attache (1001) est réalisée en fourreau de revêtement élastomère.

## Patentansprüche

1. Stutzen für einen Lenkergriff, wobei der Stutzen eine Tasche (200) aufweist, die in der Lage ist, eine Hand aufzunehmen, **dadurch gekennzeichnet, dass** er darüberhinaus ein Gehäuse (100) von im Wesentlichen Drehgehäuseform aufweist, dessen eine Ende offen ist und das andere einen Befestigungspunkt (106) trägt, um die Tasche (200) zu befestigen, wobei das Gehäuse (100) wenigstens über einen Abschnitt seiner Länge eine Klammer (1001) mit einer Innenform aufweist, die ähnlich ist zu jener eines nominellen minimalen Griffs, derart, dass das Gehäuse ausgebildet ist, um auf einen Lenkergriff in einer aufgesteckten Position aufgesteckt zu werden, und das Gehäuse (100) wenigstens ein Klemmmittel in aufgesteckter Position aufweist, das ein enges Klemmen der Klammer am Lenkergriff sicherstellt.

2. Stutzen nach Anspruch 1, **dadurch gekennzeichnet, dass** das Gehäuse wenigstens einen ersten rohrförmigen Abschnitt aufweist, der die Klammer (1001) bildet, wobei die Klammer (1001) im Wesentlichen in Form eines Rohres ausgebildet ist, das gemäß seiner Längsmittelachse durchtrennt ist.

3. Stutzen nach Anspruch 2, **dadurch gekennzeichnet, dass** der erste rohrförmige Abschnitt einen Innendurchmesser aufweist, der aus einem Bereich ausgewählt ist, der von 26 mm bis 32 mm reicht, bevorzugt etwa 29 mm.

4. Stutzen nach Anspruch 2 oder 3, **dadurch gekennzeichnet, dass** das Gehäuse (100) einen Endabschnitt (1002) aufweist, der auf der Längsmittelachse des ersten rohrförmigen Abschnitts zentriert ist, wobei der Endabschnitt (1002) einen zweiten rohrförmigen Abschnitt bildet, der den ersten fortsetzt und als durchtrenntes Rohr gemäß seiner Längsmittelachse ausgebildet ist, wobei er einen Innendurchmesser aufweist, der im Wesentlichen größer ist als jener des ersten rohrförmigen Abschnitts (1001).

5. Stutzen nach Anspruch 4, **dadurch gekennzeichnet, dass** der Endabschnitt (1002) einen Durchmesser aufweist, ausgebildet aus einem Bereich, der von 30 mm bis 45 mm reicht, bevorzugt etwa 41 mm.

6. Stutzen nach einem der vorhergehenden Ansprüche, **dadurch gekennzeichnet, dass** das Gehäuse zwei Halbschalen (100A, 100B) aufweist, die die Klammer (1001) bilden, wobei die Klammer (1001) derart ausgebildet ist, dass sie ein Rohr in aufgesteckter Position bildet, wobei sie im Wesentlichen den Umfang des Lenkergriffs umhüllt.

7. Stutzen nach einem der vorhergehenden Ansprüche, **dadurch gekennzeichnet, dass** die Klammer (1001) aus einem halbstarren Material ausgebildet ist und über wenigstens einen Abschnitt ihrer Länge freie Längsränder (108) aufweist, wobei die freien Längsränder (108) von ihrer Ruheposition beabstandet werden können, um das Gehäuse (100) auf dem Griff in aufgesteckter Position aufzustecken, und wobei das Klemmmittel ein Andruckmittel der freien Längsränder der aufgesteckten Position in die Ruheposition ist.

8. Stutzen nach Anspruch 7, **dadurch gekennzeichnet, dass** die freien Längsränder (108) umfangsseitig durch Lippen (110) über wenigstens einen Abschnitt ihrer Länge verlängert sind.

9. Stutzen nach Anspruch 8, **dadurch gekennzeichnet, dass** die Lippen (110) von ihrer Ruheposition beabstandet werden können, um das Gehäuse (100) auf den Griff aufzustecken.

10. Stutzen nach einem der vorhergehenden Ansprüche, **dadurch gekennzeichnet, dass** das Gehäuse (100) eine Einschnürung (112) aufweist, die es umfangsseitig umgibt.

11. Stutzen nach Anspruch 10, **dadurch gekennzeichnet, dass** jede Einschnürung (112) von wenigstens einem Steg (114) überbrückt ist, wobei jeder Steg (114) einen Durchtritt für eine Sicherheitsschlauchklemme bildet.

12. Stutzen nach einem der vorhergehenden Ansprüche, **dadurch gekennzeichnet, dass** das Gehäuse (100) aus einem thermoplastischen Material gebildet ist, das ausgewählt ist aus der Gruppe, die die Polypropylene, die Polyurethane, die Polyamide und die Elastomere enthält.

13. Stutzen nach Anspruch 1, **dadurch gekennzeichnet, dass** die Klammer (1001) aus einer Hülse mit einem Elastomerüberzug gebildet ist.

## Claims

1. Sleeve for a handlebar grip, the sleeve comprising a pocket (200) which is capable of accommodating a hand, **characterised in that** it further comprises a shell (100) which is substantially in shape of revolution and of which one of the ends is open, and the other supports a fixing location (106) for fixing said pocket (200), the shell (100) comprising over at least a portion of the length thereof a fitment (1001) having an inner shape which corresponds to that of a minimal nominal grip so that the shell is arranged so as to be fitted onto a handlebar grip in a fitted position, and the shell (100) having at least one means for clamping in a fitted position which ensures tight clamping of the fitment against the handlebar grip.

2. Sleeve according to claim 1, **characterised in that** the shell comprises at least a first tubular portion which forms the fitment (1001), the fitment (1001) being arranged substantially in the form of a tube which is sectioned along the longitudinal centre axis thereof.

3. Sleeve according to claim 2, **characterised in that** the first tubular portion has an internal diameter which is selected from a range from 26 mm to 32 mm, preferably about 29 mm.

4. Sleeve according to either claim 2 or claim 3, **characterised in that** the shell (100) comprises a terminal portion (1002) which is centred on the longitudinal centre axis of the first tubular portion, the terminal portion (1002) forming a second tubular portion in continuation of the first and being arranged in the form of a tube which is sectioned along the longitudinal centre axis and which has an internal diameter which is substantially greater than that of the first tubular portion (1001).

5. Sleeve according to claim 4, **characterised in that** the terminal portion (1002) has a diameter which is selected from a range from 30 mm to 45 mm, preferably about 41 mm.

6. Sleeve according to any one of the preceding claims, **characterised in that** the shell comprises two half-shells (100A, 100B) which form a fitment (1001), the fitment (1001) being arranged so as to form a tube in a fitted position which substantially surrounds the periphery of the handlebar grip.

7. Sleeve according to any one of the preceding claims, **characterised in that** the fitment (1001) is produced from a semi-rigid material and comprises free longitudinal edges (108) over at least a portion of the length thereof, the free longitudinal edges (108) being able to be moved away from their rest position in order to fit the shell (100) on the grip in a fitted position, and the clamping means being a means for returning the free longitudinal edges of the fitted position towards the rest position.

8. Sleeve according to claim 7, **characterised in that** the free longitudinal edges (108) are extended circumferentially by lips (110) over at least a portion of the length thereof.

9. Sleeve according to claim 8, **characterised in that** the lips (110) may be spaced apart from their rest position in order to fit the shell (100) to the grip.

10. Sleeve according to any one of the preceding claims, **characterised in that** the shell (100) comprises at least one groove (112) which surrounds it circumferentially.

11. Sleeve according to claim 10, **characterised in that** each groove (112) is spanned by at least one collar (114), each collar (114) forming a loop for a Colson type security tie.

12. Sleeve according to any one of the preceding claims, **characterised in that** the shell (100) is produced from a thermoplastic material which is selected from the group comprising polypropylenes, polyurethanes, polyamides and elastomers.

13. Sleeve according to claim 1, **characterised in that** the fitment (1001) is produced in the form of a sheath of elastomer covering.
